# EUROPEAN PATENT APPLICATION

(11) **EP 1 613 063 A2**
(43) Date of publication of application: **04.01.2006**
(21) Application number: 04257045.7
(22) Date of filing: 12.11.2004
(51) Int. Cl.: H04N 5/335, H04N 5/217, H04N 3/15

(54) **CMOS image sensor which reduces noise caused by charge pump operation**

(30) Priority: 30.06.2004 JP 2004194753
(71) Applicant: FUJITSU LIMITED, Kawasaki-shi, Kanagawa 211-8588 (JP)
(72) Inventor: Yanagisawa, Makoto, Kawasaki-shi Kanagawa 211-8588 (JP); Inoue, Tadao, Kawasaki-shi Kanagawa 211-8588 (JP); Funakoshi, Jun, Kawasaki-shi Kanagawa 211-8588 (JP)
(74) Representative: Hitching, Peter Matthew

(57) **Abstract**

A CMOS image sensor (1) of the present invention comprises an array (10) of a picture element circuit, a unit of correlated double sampling (50) one picture element line of the array, a charge pump type voltage up unit (250) of supplying a predetermined step-up voltage to the picture element circuit that forms an array and a prevention unit of preventing the noise caused by a pumping operation of the charge pump type voltage up unit. The prevention unit may be a prohibition unit of prohibiting a pumping operation of the charge pump type voltage up unit. In the case where the charge pump type voltage up unit comprises a voltage up circuit for assigning a voltage up output in accordance with an assigned clock and a clock generation circuit for generating a clock in such a way that the voltage up output matches with the predetermined upped voltage, the prohibition unit of prohibiting a pumping operation may comprise a not-assignment unit of not assigning an output of the clock generation unit to the voltage up circuit.

## Description

### Background of the Invention

### Field of the Invention

The present invention relates to a complementary metal oxide semiconductor (CMOS) image sensor using a circuit in which a voltage up is caused by a charge pump. Specifically, it relates to a technology of reducing a noise caused by a charge pump operation in such a CMOS image sensor.

### Description of the Related Art

In order to secure a certain degree of image quality in a CMOS sensor, a high voltage greater than a power source voltage of the sensor is generally required. Therefore, a charge pump which is easily miniaturized and is easily implemented using an integrated circuit (IC), is often used to obtain the required high voltage. In this case, however, a noise caused by a pumping operation becomes a problem. Therefore, the present invention relates to a technology for reducing the noise caused by a pumping operation in a CMOS image sensor that ups a voltage using a charge pump.

A technology of avoiding noise by inputting a voltage up clock into an imaging signal in a CCD picture element using a high voltage generated using a charge pump type voltage up circuit has been disclosed (patent literature 1). In this literature, a timing of a timing generation unit is set in such a way that a voltage up clock is applied to a control unit from a timing generation circuit (that is, a pumping operation is performed) using a period (that is, a horizontal blanking period, etc.) while the output of an imaging signal from a CCD image sensor is stopped.

### [Patent literature 1]

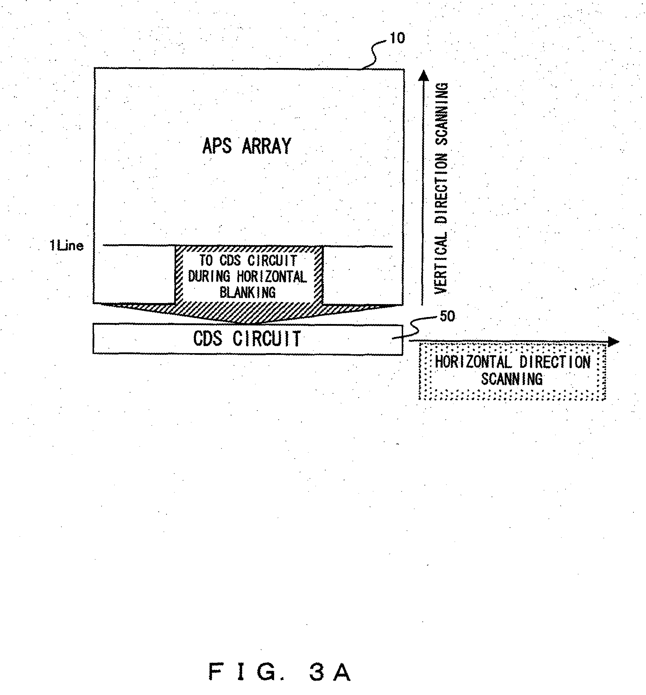

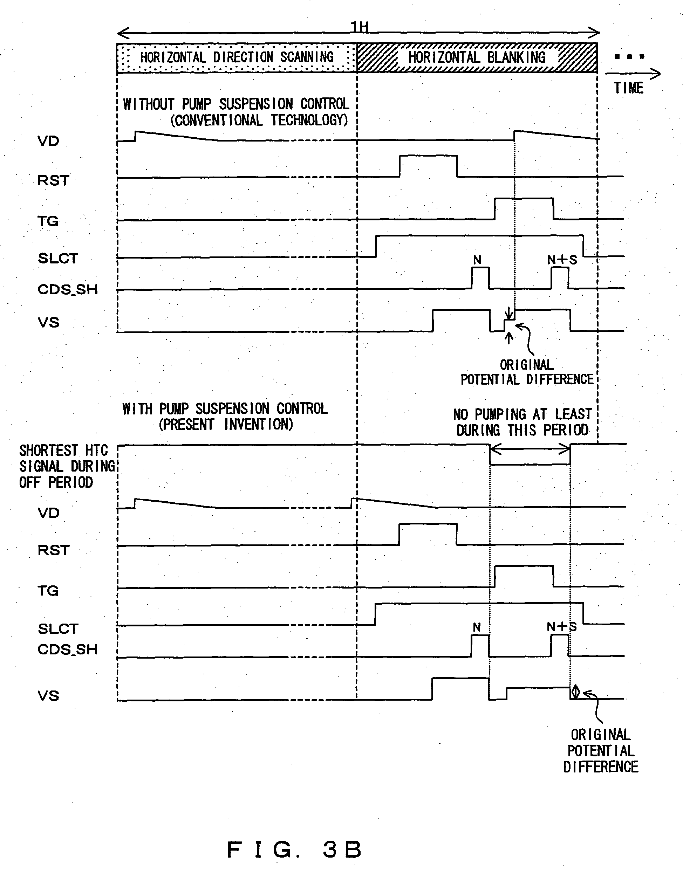

### Japanese laid-open application publication No. 2001-218119 (page7, Fig. 3)

When the technology of the patent literature 1 is applied to a CMOS image sensor, a charge pump operation is performed even during a blanking period that is the most important period for a correlated double sampling (CDS) operation in a reading-out picture elements operation. Therefore, this technology is inconvenient.

However, it is assumed that a technology of reducing the noise cased by a pumping operation in a CMOS image sensor using a circuit in which a voltage up is caused by a charge pump has not been disclosed.

### Summary of the Invention

The present invention aims at offering a CMOS image sensor for reducing a noise caused by a charge pump operation using a charge pump type voltage up circuit.

Furthermore, the present invention aims at offering a method of reducing the noise caused by a charge pump operation in a CMOS image sensor using a charge pump type voltage up circuit.

At one aspect, the present invention offers a CMOS image sensor comprising arrays of picture element circuits, a correlated double sampling unit of correlated double sampling one picture element line of an array, a charge pump type voltage up unit supplying a predetermined upped voltage to picture element circuits forming an array and a prevention unit preventing affects of a noise caused by a pumping operation of a charge pump type voltage up circuit to a correlated double sampling.

The prevention unit may be a unit preventing a pumping operation of a charge pump type voltage up circuit.

The charge pump type voltage up circuit comprises a voltage up circuit for assigning a voltage up output in accordance with an assigned clock, a clock generation circuit for generating a clock in such a way that the voltage up output matches with a predetermined upped voltage. Furthermore, the prevention unit preventing a pumping operation comprises a not-assignment unit not-assigning an output of the clock generation unit to the voltage up circuit.

The CMOS image sensor further comprises a unit generating a control signal having value of logic "0" during the prevention period. The not-assignment unit may be a unit assigning an AND operation between the clock from the clock generation circuit and the control signal.

It is preferable that the prevention period includes at least a period between an ending time N of reading out the correlated double sampling and an ending time S of reading out the correlated double sampling. The prevention period may be a horizontal blanking period.

At another aspect, the present invention offers a method of reducing a noise caused by a pumping operation including a step of preventing affects of a noise caused by a pumping operation of a charge pump type voltage up circuit to a correlated double sampling, in a CMOS image sensor comprising arrays of picture element circuits, a correlated double sampling unit of correlated double sampling one array of picture elements line and a charge pump type voltage up unit supplying a predetermined upped voltage up picture element circuits for forming an array.

### Brief Description of the Drawings

Fig. 1 is a block diagram conceptually showing the configuration of a CMOS image sensor of one preferred embodiment of the present invention;
Fig. 2A is a circuit diagram showing the configuration of a picture element circuit 100 of Fig. 1;
Fig. 2B is a circuit diagram showing the configuration of a charge pump type voltage up circuit for generating an upped voltage VD;
Fig. 2C shows a waveform of an output voltage VD in the case where the output of an HTC signal generation circuit 210 is logic 0 in a voltage up circuit 250 of Fig. 2B;
Fig. 3A shows processings of picture element loading and horizontal scanning for each one horizontal scan line (1H);
Fig. 3B is a timing chart explaining operations of the picture element circuit 100 and a line control circuit 200; and
Fig. 4 shows an example of a preferable horizontal timing control (HTC) signal.

According to the present invention, a noise caused by a charge pump operation can be reduced in the CMOS image sensor using a charge pump type voltage up circuit.

### Preferred Embodiments of the Invention

The following is the detailed explanation of the present invention in reference to preferred embodiments of the present invention and attached drawings. Meanwhile, in a plurality of drawings, like reference numerals denote like elements.

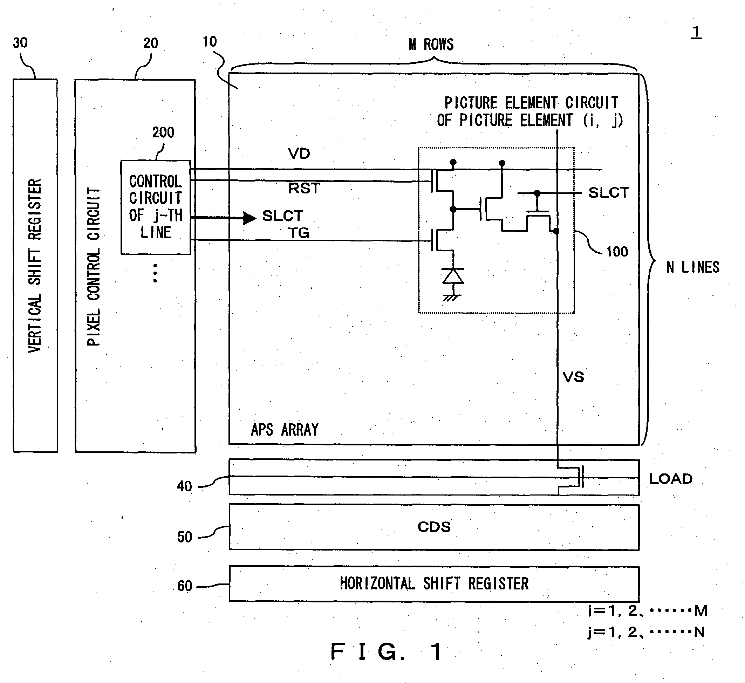

Fig. 1 is a block diagram conceptually showing the configuration of a CMOS image sensor that reduces the noise generated by a pumping operation and uses a charge pump type voltage up circuit according to one preferred embodiment of the present invention. In Fig. 1, a CMOS image sensor 1 generally comprises a pixel control circuit 20 for controlling and driving an active pixel sensor (APS) forming an APS array 1 and an APS array 10, a vertical shift register 30 for storing a row address, a line loading circuit 40 for loading for each line the respective lines of the APS array 10 into a correlated double sampling (CDS) circuit 50 and a horizontal shift register 60 for storing a line address. The APS array 10 includes an array of the APS 100 of M lines X N rows. In Fig. 1, only the picture element circuit of i rows (i=1, 2, ..., M) and j lines (j=1, 2, ..., N) is shown as a representative of an APS 100. In addition, only a line control circuit of the j-th line is shown as a representative of the line control circuit for each line 20 for forming the pixel control circuit 200.

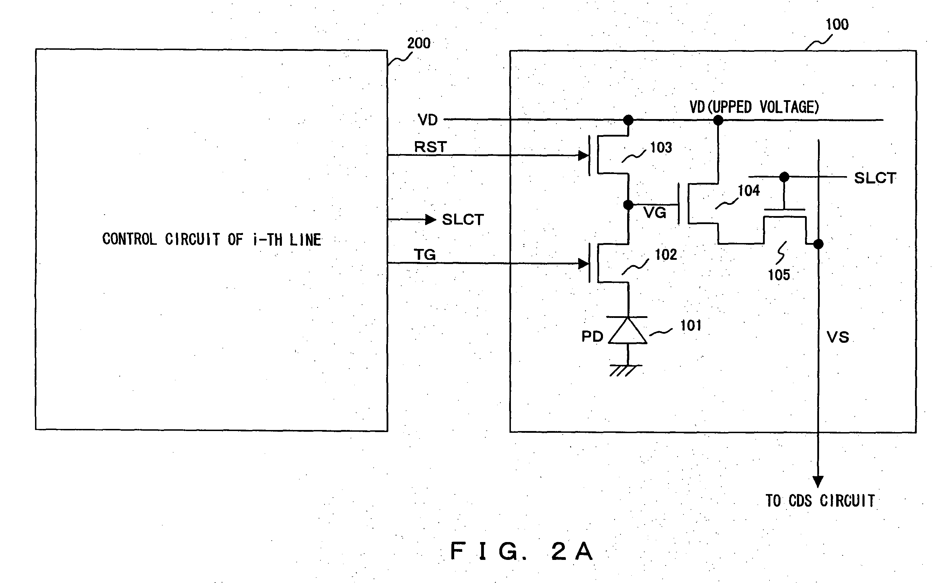

Fig. 2A is a circuit diagram showing only the configurations of parts necessary for the explanation of one APS 100 and the line control circuit 200 for driving this APS 100. In Fig. 2A, the APS 100 comprises a photoelectric conversion element 101 such as a photodiode for detecting light and converting this light into electricity, and four CMOS field effect transistors (CMOSFET). An anode of the photoelectric conversion element 101 is grounded and a cathode is connected to one channel electrode of a transistor 102. The other channel of the transistor 102 is connected to one channel electrode of a reset transistor 103 and a gate electrode of an amplification transistor 104. The other channel electrode of the reset transistor 103 is connected to a conductor for a high voltage VD that is voltage upped at the line control circuit 200 as described later. The amplification transistor 104 is connected to a conductor for assigning a high voltage VD at one channel electrode while the transistor is connected to one channel electrode of a transistor 105 at the other channel electrode. Then, the gate electrode is controlled by a line selection signal SLCT supplied from the line control circuit 200. The other channel electrode of the transistor 105 is connected to a reading-out wire VS of the line loading circuit 40. A gate of the transistor 102 is controlled by a transfer gate (TG) control signal of the line control circuit 200. A gate electrode of the reset transistor 103 is controlled by a reset control signal RST from the line control circuit 200. Thus, each APS forming the APS array is quite a typical picture element circuit but the picture element circuit is not limited to this configuration. That is, any picture element circuit is available if it is driven by the upped voltage VD. In other words, the present invention can be applied to any CMOS sensor if it comprises an APS array 10 including the picture element 100 driven by the upped voltage VD.

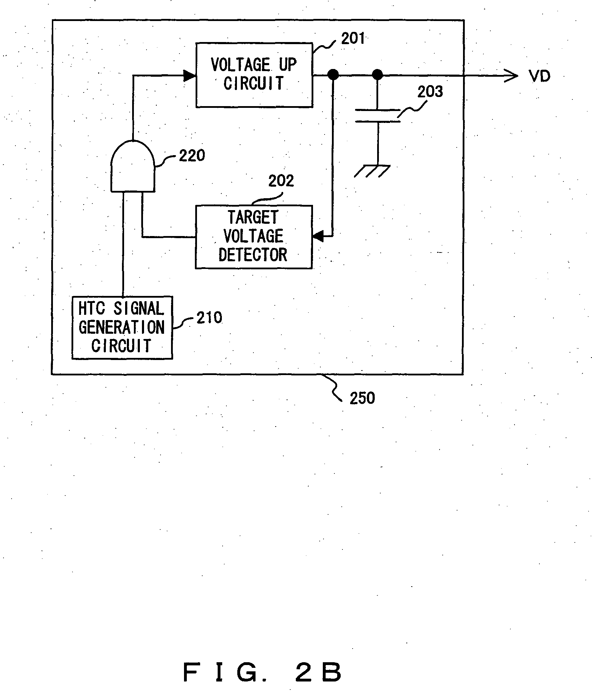

On the other hand, the line control circuit 200 has a function of generating a TG control signal, a line selection control signal SLCT and a reset signal RST that are described later. As shown in Fig. 2B, the voltage up circuit comprises a charge pump type voltage up circuit comprises a voltage up circuit 201 for assigning an output voltage VD in accordance with a supplied pump clock signal, a target voltage detector 202 for generating a pumping clock to be supplied to the voltage up circuit 201 in such a way that an output level of the voltage up circuit 201 matches with a target upped voltage, a condenser 203 for smoothing an output voltage VD of the voltage up circuit 201, an HTC signal generation circuit 210 for generating a horizontal timing control (HTC) signal for controlling a pumping operation of the voltage up circuit 201 based on the present invention and an AND circuit 220 for gating a pumping clock from the target voltage detector 202 using an HTC signal from the HTC signal generation circuit 210. Meanwhile, any charge pump type voltage up circuit including the up voltage circuit 201 and the target voltage detector 202 is available if this circuit functions properly.

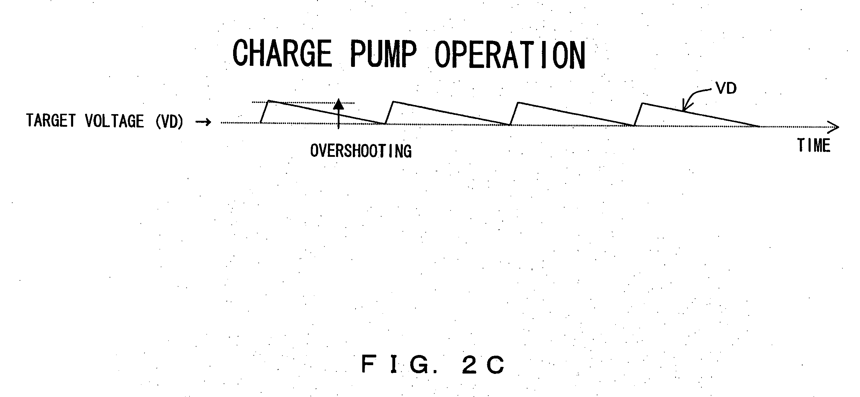

Fig. 2C shows a waveform of the output voltage VD in the case where the output of the HTC signal generation circuit 210 has a value of logic "1" in the voltage up circuit 250 of Fig. 2B. As apparent from Fig. 2C, the upped voltage VD is a saw waveform in synchronous with a pumping clock from the target voltage detector 202.

Fig. 3A is a diagram explaining operations during one horizontal scan line (1H) in the charge pump type voltage up circuit of Fig. 1. Fig. 3A shows a loading operation between the APS array 10 and the CDS circuit 50 for each 1H and a horizontal transfer output (horizontal scanning). When each picture element line of the APS array 10 is selected by the line selection signal SLCT, this line is loaded into the CDS circuit 50 via the line loading circuit 30 during a horizontal blanking operation (slashed period in Fig. 3A). At the same time, a CDS processing is performed and subsequently in a horizontal scanning period, this line is transferred to a horizontal direction to be outputted.

Fig. 3B is a time-chart explaining the operations performed in the picture element circuit 100 and the line control circuit 200 during a horizontal scanning period (dotted period) and a horizontal blanking period (slashed period). In Fig. 3B, please note that the size ratio in the horizontal direction (time direction) does not always shows the real size ratio. For example, the horizontal direction scanning period is actually much longer than the horizontal blanking period, but for the sake of the explanation of the operations of the horizontal blanking period, both periods are illustrated approximately the same.

At first, the operation without pump suspension control (conventional technology) described in the middle of Fig.3B. This operation corresponds to the operation in the case where the output of the HTC signal generation circuit 210 is always fixed to have a value of logic "1" in the line control circuit 200 of Fig. 2A. In Fig. 3B, firstly, in the case of horizontal direction scanning, the control signal RST is set at a value of logic "1" at a publicly-known and proper timing and the control signal TG is set at logic 1 while the RST signal is logic 1. Thus, the photoelectric conversion element 101 is charged up to a predetermined voltage.

In the horizontal blanking period, an N level appears on a reading-out wire VS of a transistor 105 by setting the RST signal at a value of logic "1" only during a predetermined period while the current picture element line (j) is selected by maintaining the SLCT signal of the current picture element (j) at a value of logic "1". Furthermore, an N+S level appears on a reading-out wire VS of the transistor 105 by setting the control signal TG at a value of logic "1" only during a predetermined period. Therefore, a sampling operation is perform for these N and N+S levels by setting CDS_SH at a value of logic "1" at an appropriate timing, that is, at the N and N+S timings of a CDS_SH (sample and hold) signal. In this way, a signal component S (correlated double sampling) is obtained by calculating the difference between sampled two signal levels of the reading-out wire VS at N and N+S timings.

As shown in Fig. 3B, however, if a pumping clock is inputted into the voltage up circuit 201 during a period between an ending time of a timing N and an ending time of a timing N+S, a saw waveform appears on the output voltage VD and this wave occurs on the reading-out wire VS as noise (that is, the N+S level cannot be maintained constant due to the noise) so that the result of a CDS processing is not a value reflecting the exposure amount.

Then, according to the present invention, a pumping operation of the voltage step-up circuit 201 is prohibited at least during a period of obtaining the potential of a cathode of the photoelectric conversion element 101 for performing a CDS processing, that is, during a period between the ending time of a sampling timing N (N reading-out) and the ending time of a sampling timing N+S (S reading-out). Thus, at least during a period between the ending time N of reading-out and the ending time S of reading-out, the CDS processing is not influenced by the noise caused by a pumping operation so that the present invention can reduce the influence of the noise caused by a pumping operation.

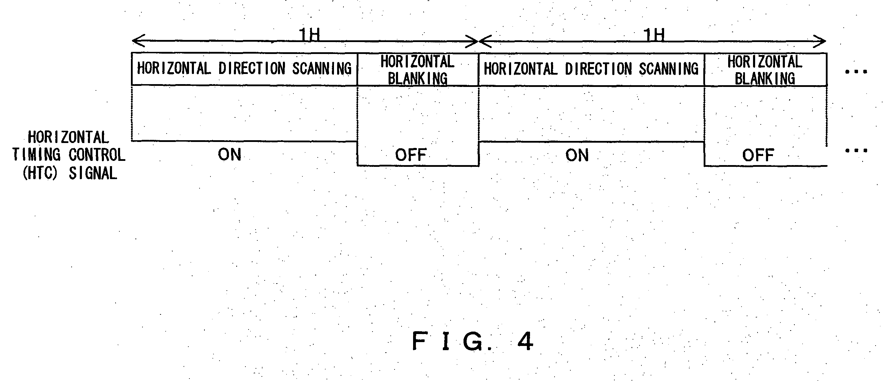

Fig. 4 shows an example of a preferable horizontal timing control (HTC) signal. As shown in Fig. 4, if the HTC signal is set at a value of logic "0" during the horizontal blanking period and a pumping operation is prohibited, no influence is given to a CDS processing. Furthermore, the configuration of the HTC signal generation circuit 210 becomes easier so that this example is preferable.

As mentioned above, the present invention can reduce the influence of the noise caused by a pumping operation.

As mentioned above, the preferred embodiments are only described for the explanation of the present invention. Therefore, a person having ordinary skill in the art can easily make various changes, modifications and amendments to the above-mentioned preferred embodiments based on a technical thought or a technical principle of the present invention.

For example, if a period of a value of logic "0" of the HTC signal includes a period between the ending time N of reading-out and the ending time S of reading-out and further includes a period while the operation of the APS 100 is smoothly implemented, this period is not limited to the example as shown in Fig. 4. Therefore, this period can be freely determined.

Furthermore, the circuit configuration of the APS 100 is not limited to the circuit as shown in Fig.2A and accordingly any picture element circuit using a an upped voltage at a charge pump type voltage up circuit is available.

It is appropriate that the step-up voltage can be used for signals such as the RTS signal, SLCT signal, TG signal, etc.

## Claims

1. A CMOS image sensor (1), comprising:
an array (10) of a picture element circuit;
a correlated-double-sampling unit (50) correlated-double-sampling one picture element line of the array;
a charge pump type voltage up unit (250) supplying a predetermined upped voltage to the picture element circuit forming the array; and
a prevention unit preventing affects of noise caused by a pumping operation of the charge pump type voltage up circuit to the correlated double sampling.

2. The CMOS image sensor according to claim 1, wherein
the prevention unit comprises a prohibition unit prohibiting a pumping operation of the charge pump type voltage up unit.

3. The CMOS image sensor according to claim 2, wherein:
the charge pump type voltage up unit comprises a voltage up circuit for assigning a voltage up output in accordance with an assigned clock and a clock generation circuit for generating the clock in such a way that the voltage up output matches with the predetermined upped voltage; and
the prohibition unit prohibiting the pumping operation comprises a not-assignment unit not assigning an output of the clock generation circuit to the voltage up circuit.

4. The CMOS image sensor according to claim 3, further comprising a creation unit creating a control signal having a value of logic "0" during the prevention period, wherein
the not-assignment unit comprises an assignment unit assigning an AND operation between the clock generated by the clock generation circuit and the control signal to the voltage up circuit.

5. The CMOS image sensor according to one of claims 1 to 4, wherein
the prevention period includes at least a period between an ending time N of reading out the correlated double sampling and an ending time S of reading out the correlated double sampling.

6. The CMOS image sensor according to one of claims 1 to 4, wherein
the prevention period is a horizontal blanking period.

7. A method of reducing noise caused by a pumping operation, comprising
in a CMOS image sensor comprising an array of a picture element circuit, a correlated double sampling unit correlated double sampling one picture element line of the array and a charge pump type voltage up unit supplying a predetermined upped voltage to a picture element circuit forming the array,
preventing affects of a noise caused by a pumping operation of the charge pump type voltage up circuit to the correlated double sampling.

8. The method of reducing noise caused by a pumping operation according to claim 7, wherein
the preventing comprises prohibiting a pumping operation of the charge pump type voltage step unit.
